# EUROPEAN PATENT APPLICATION

(11) **EP 4 098 407 A1**
(43) Date of publication of application: **07.12.2022**
(21) Application number: 21177759.4
(22) Date of filing: 04.06.2021
(51) Int. Cl.: B25J 9/16, G05D 1/02

(54) **A SYSTEM FOR GUIDING A VEHICLE AND AN ASSOCIATED ROBOTIC ARM FOR LOADING AN OBJECT ONTO THE VEHICLE**

(71) Applicant: VOLVO TRUCK CORPORATION, 405 08 Göteborg (SE)
(72) Inventor: PERSSON, Daniel, 413 21 Göteborg (SE)
(74) Representative: Valea AB

(57) **Abstract**

The invention relates to a system (1) for guiding a vehicle (100) and an associated robotic arm (110) for loading an object (200) onto the vehicle (100), the system comprising:
- a first perception sensor (120) associated with the vehicle (100);
- a second perception sensor (130) associated with the robotic arm (110);
- a control unit (140) communicatively connected to the first and second perceptions sensors (120, 130);
wherein the control unit (140) is configured to:
- obtain a first image (Im_1) from the first perception sensor (120), which first image depicts the object (200), and identify a first marker (M1) in the obtained first image, which first marker (M1) is provided on the object (200), and
- by use of a first image analysis algorithm, such as a first image matching algorithm, determine a first marker position with respect to the vehicle (100),
- by use of the determined first marker position, determine a plurality of possible loading positions for the vehicle, which possible loading positions define an area (A) for the vehicle (100) with respect to the object (200) where the object can be loaded onto the vehicle (100) by the robotic arm (110),
- by use of simulated robotic arm movements for loading the object (200) onto the vehicle (100) from each one of the plurality of possible loading positions, select one possible loading position in the area (A) as a loading position to be used by the vehicle (100), wherein the loading position to be used by the vehicle (100) is selected at least based on a predicted wear of the robotic arm (110) when loading the object (300) onto the vehicle (100) from each one of the plurality of possible loading positions,
- guide the vehicle (100) along a path (P1) to the loading position to be used by the vehicle (100), and
wherein the control unit (140) is further configured to:
- obtain a second image (lm_2) from the second perception sensor (130), which second image depicts the object (200), and identify a second marker (M2) in the obtained second image, which second marker (M2) is provided on the object (200), and
- by use of a second image analysis algorithm, such as a second image matching algorithm, determine a second marker position with respect to the robotic arm (110), and
- guide the robotic arm (110) to load the object (200) onto the vehicle (100) by use of the determined second marker position. The invention also relates to a vehicle, a method, a computer program and to a computer readable medium.

## Description

### TECHNICAL FIELD

The invention relates to a system for guiding a vehicle and an associated robotic arm for loading an object onto the vehicle. The invention also relates to a vehicle, a method, a computer program and to a computer readable medium.

The invention can be applied in heavy-duty vehicles, such as trucks, buses and construction equipment. Although the invention will be described with respect to an articulated vehicle combination, the invention is not restricted to this particular vehicle, but may also be used in other vehicles such as any other type of truck without any articulation joint.

### BACKGROUND

Driver assistance systems for assisting a driver during manoeuvring of a vehicle has become more frequently used in recent years. For example, a driver may be assisted during reversing by use of a rearward facing camera which provides a rearward directed image that the driver can view during the reversing operation, thereby facilitating the reversing manoeuvre.

These systems may be especially advantageous for commercial vehicles, e.g. trucks, since they may significantly reduce the time required for performing the vehicle manoeuvre, thereby increasing the productivity without compromising with safety.

For example, when a truck and trailer combination is about to reverse towards a loading area of a terminal, a reverse assistance system may be used for supporting the driver to reach the loading area in short time without compromising with safety. The assistance may include reversing instructions for the driver and/or it may take over at least some of the driver operations, including steering, braking and propulsion.

Once the truck and trailer combination has reached the loading area and been parked, it may be loaded with goods. This is usually done manually and/or by use of e.g. a forklift truck. As such, the loading is usually time consuming and requires manual involvement.

In view of the above, there is still room for improvement when loading e.g. goods onto a vehicle.

### SUMMARY

An object of the invention is to provide an improved system for guiding a vehicle and an associated robotic arm such that the loading productivity is increased in a cost-effective manner, whilst also ensuring a long service life. Further objects of the invention are to provide an improved vehicle, an improved method, a computer program and/or a computer readable medium which achieve increased loading productivity in a cost-effective manner, whilst also ensuring a long service life.

According to a first aspect, the object is achieved by a system according to claim 1.

Thus, a system for guiding a vehicle and an associated robotic arm for loading an object onto the vehicle is provided. The system comprises:
- a first perception sensor associated with the vehicle;
- a second perception sensor associated with the robotic arm;
- a control unit communicatively connected to the first and second perceptions sensors; wherein the control unit is configured to:
- obtain a first image from the first perception sensor, which first image depicts the object, and identify a first marker in the obtained first image, which first marker is provided on the object, and
- by use of a first image analysis algorithm, such as a first image matching algorithm, determine a first marker position with respect to the vehicle,
- by use of the determined first marker position, determine a plurality of possible loading positions for the vehicle, which possible loading positions define an area for the vehicle with respect to the object where the object can be loaded onto the vehicle by the robotic arm,
- by use of simulated robotic arm movements for loading the object onto the vehicle from each one of the plurality of possible loading positions, select one possible loading position in the area as a loading position to be used by the vehicle, wherein the loading position to be used by the vehicle is selected at least based on a predicted wear of the robotic arm when loading the object onto the vehicle from each one of the plurality of possible loading positions,
- guide the vehicle along a path to the loading position to be used by the vehicle, and wherein the control unit is further configured to:
   - obtain a second image from the second perception sensor, which second image depicts the object, and identify a second marker in the obtained second image, which second marker is provided on the object, and
   - by use of a second image analysis algorithm, such as a second image matching algorithm, determine a second marker position with respect to the robotic arm, and
   - guide the robotic arm to load the object onto the vehicle by use of the determined second marker position.

By the provision of a system as disclosed herein, the loading productivity can be increased in a cost-effective manner, whilst also ensuring that the service life of especially the robotic arm can be increased. In particular, it has been realized that by simulating robotic arm movements for loading the object onto the vehicle from different possible loading positions, the simulations can be used for determining a predicted wear of the robotic arm for loading the object onto the vehicle from the different possible loading positions. For example, some possible loading positions may require more complicated arm movements, longer arm movements etc., which may result in a higher wear than required arm movements for loading the object onto the vehicle from other possible loading positions. Thereby, by selecting the loading position to be used at least based on the predicted wear, the service life of the robotic arm can be increased. In addition, by using the first and second perception sensors as disclosed herein, and by using image analysis algorithms as also disclosed herein, the object can be identified in a fast and reliable manner. In addition, the object can thereby also be loaded onto the vehicle in a fast and reliable manner. In particular, it allows the area for the vehicle with respect to the object where the object can be loaded onto the vehicle by the robotic arm to be identified in short time. It further allows the object to be identified by the second perception sensor in short time, enabling fast and reliable loading onto the vehicle.

A simulation as used herein shall be interpreted broadly and may be defined as an imitation of a real-world operation by a unit or system. The simulations may be performed in a virtual environment, i.e. by use of a computer, and/or the simulations may be performed in a real-world test environment.

The robotic arm as disclosed herein may be any type of robotic arm which can load an object onto a vehicle. However, the robotic arm typically includes one, preferably more than one, joint allowing rotational movements with respect to one or more rotational axes, and also allowing translational movements. The robotic arm may also comprise at least one telescopic member for providing a translational movement. The robotic arm also typically includes a gripping member for gripping the object. The gripping member may for example be a claw-shaped member, a hook member, a suction member using vacuum for gripping, a magnetic member, or any other type of gripping member.

Optionally, the control unit may further be configured to:
- select the loading position to be used by the vehicle by use of simulated vehicle guiding paths for the vehicle from a vehicle start position to each one of the plurality of possible loading positions, the vehicle start position being defined by a position of the vehicle when the first image was obtained, wherein the loading position to be used by the vehicle is further selected based on at least one of a predicted vehicle manoeuvre stability, drive time and driver comfort which is/are associated with each one of the simulated vehicle guiding paths. As such, a further improved system may be provided in which also the different possible paths for the vehicle can be evaluated in terms of predicted vehicle manoeuvre stability, drive time and driver comfort. Thereby, a more optimal loading position to be used for the vehicle may be found and used.

The vehicle may be an articulated vehicle combination comprising at least one articulation joint, and the vehicle guiding paths may be simulated by use of a vehicle model for the articulated vehicle combination. For example, it has been realized that the above-mentioned vehicle manoeuvre stability, drive time and driver comfort may vary more for the different possible paths when the vehicle is an articulated vehicle combination. As such, by simulating the possible paths by use of the aforementioned vehicle model, a more optimal loading position to be used may be found.

Optionally, the predicted vehicle manoeuvre stability associated with each one of the simulated vehicle guiding paths may define a maximum articulation angle of the at least one articulation joint of the vehicle while being guided along the respective simulated vehicle guiding paths, wherein the loading position to be used by the vehicle is further selected such that the maximum articulation angle of the guiding path to the loading position to be used does not exceed a predetermined articulation angle value. Thereby, possible jack-knifing conditions of the articulated vehicle combination may be avoided.

Optionally, the first marker position with respect to the vehicle may be determined by matching the obtained first image with at least one first reference image, wherein the first reference image contains a first reference marker positioned at the same, or substantially the same, position as a position of the first marker in the obtained first image, wherein the position of the first reference marker in the at least one first reference image is associated with a first actual stored location, and wherein the first actual stored location corresponds to the first marker position with respect to the vehicle. Thereby, by using reference images as disclosed herein, the object's position may be identified in a fast and reliable manner. The first actual stored location may be a location in a two-dimensional plane, such as a plane defined by a lateral and a vertical extension with respect to the vehicle. The first actual stored location may also be a location in a three-dimensional space, such as a space defined by a lateral, vertical and longitudinal extension with respect to the vehicle.

Optionally, the second marker position with respect to the robotic arm may be determined by matching the obtained second image with at least one second reference image, wherein the second reference image contains a second reference marker positioned at the same, or substantially the same, position as a position of the second marker in the obtained second image, wherein the position of the second reference marker in the at least one second reference image is associated with a second actual stored location, and wherein the second actual stored location corresponds to the second marker position with respect to the robotic arm. The second actual stored location may be a location in a two-dimensional plane or a three-dimensional space, similar to the first actual stored location, such as a plane defined by a lateral and a vertical extension with respect to the robotic arm or such as a space defined by a lateral, vertical and longitudinal extension with respect to the robotic arm.

Optionally, the control unit may be configured to identify a first and/or second marker having at least one predetermined property, such as marker size, marker shape, marker pattern, marker colour etc.

Preferably, the robotic arm is guided automatically by use of the control unit, without any direct human involvement. As such, the robotic arm may according to an example embodiment de denoted an autonomous robotic arm.

The vehicle may be a semi-autonomous or fully autonomous vehicle, wherein the movement of the vehicle is controlled by use of the control unit. Accordingly, the control unit may be configured to issue movement control signals to one or more actuators of the vehicle, such as to any one of a steering actuator, a braking actuator and a propulsion actuator. By semi-autonomous is herein meant that the control unit is configured to perform at least parts of the movement control of the vehicle, wherein e.g. a driver may still be in control of some other parts of the movement. Semi-autonomous may also mean that the control unit is configured to perform complete movement control of the vehicle at least for a limited time period, such as during a reversing manoeuvre.

Optionally, the control unit may further be configured to unload an object from the vehicle by use of the robotic arm. As such, the control unit may further be configured to guide the robotic arm for unloading the object to a predetermined position adjacent the vehicle. The control unit is preferably using information from the first and/or second perception sensors for the unloading operation, i.e. the predetermined position where the object is to be released may be identified by the first and/or second perception sensors. The control unit may further be configured to guide the vehicle along a path to an unloading area. As such, the control unit may use similar simulations as disclosed herein for the loading operation in order to find an unloading position to be used for the vehicle.

According to a second aspect, the object is achieved by a vehicle according to claim 8.

Thus, a vehicle is provided which comprises the system according to any one of the embodiments of the first aspect of the invention. Advantages and effects of the second aspect of the invention are analogous to the advantages and effects of the first aspect of the invention. It shall also be noted that all embodiments of the second aspect of the invention are combinable with all embodiments of the first aspect of the invention and vice versa.

Preferably, the vehicle further comprises a robotic arm, i.e. a robotic arm as disclosed herein. Additionally, or alternatively, a robotic arm configured as disclosed herein may also be provided off-board the vehicle, such as proximate a loading position for the vehicle.

Optionally, the second perception sensor may be mounted on the robotic arm, preferably proximate a gripping member of the robotic arm. Thereby, the position of the object with respect to the robotic arm or with respect to the gripping member may be determined more precisely.

Optionally, the vehicle may be an articulated vehicle combination comprising at least one articulation joint. For example, the articulated vehicle combination may be any kind of truck and trailer combination, such as a semitrailer combination or a so-called Nordic combination which comprises two articulation joints.

Optionally, the first perception sensor may be mounted on the vehicle such that it is directed in a reverse travelling direction of the vehicle, such as mounted on a last vehicle segment of the articulated vehicle combination mentioned in the above and such that it is directed in a reverse travelling direction of the articulated vehicle combination. It has namely been realized that the present invention is particularly advantageous when reversing the vehicle towards an object to be loaded, and more particularly when reversing an articulated vehicle combination. As such, by mounting the first perception sensor at the rear of the vehicle it can be assured that the position of the object with respect to the vehicle is reliably determined in a fast manner.

According to a third aspect, the object is achieved by a method according to claim 13.

Thus, a method for guiding a vehicle and an associated robotic arm for loading an object onto the vehicle is provided. The vehicle is associated with a system which comprises:
- a first perception sensor associated with the vehicle;
- a second perception sensor associated with the robotic arm;

Preferably, the first perception sensor is mounted on the vehicle and the second perception sensor is mounted on the robotic arm, even though also other mounting positions are feasible. Additionally, or alternatively, the first and the second perception sensors may be the same sensor, even though the aforementioned configuration is preferable.

The method comprises:
- obtaining a first image from the first perception sensor, which first image depicts the object, and identifying a first marker in the obtained first image, which first marker is provided on the object, and
- by use of a first image analysis algorithm, such as a first image matching algorithm, determining a first marker position with respect to the vehicle,
- by use of the determined first marker position, determining a plurality of possible loading positions for the vehicle, which possible loading positions define an area for the vehicle with respect to the object where the object can be loaded onto the vehicle by the robotic arm,
- by use of simulated robotic arm movements for loading the object onto the vehicle from each one of the plurality of possible loading positions, selecting one possible loading position in the area as a loading position to be used by the vehicle, wherein the loading position to be used by the vehicle is selected at least based on a predicted wear of the robotic arm when loading the object onto the vehicle from each one of the plurality of possible loading positions,
- guiding the vehicle along a path to the loading position to be used by the vehicle, and wherein the method further comprises:
   - obtaining a second image from the second perception sensor, which second image depicts the object, and identifying a second marker in the obtained second image, which second marker is provided on the object, and
   - by use of a second image analysis algorithm, such as a second image matching algorithm, determining a second marker position with respect to the robotic arm, and
   - guiding the robotic arm to load the object onto the vehicle by use of the determined second marker position.

Advantages and effects of the third aspect of the invention are analogous to the advantages and effects of the first aspect of the invention. It shall also be noted that all embodiments of the third aspect of the invention are combinable with all embodiments of the first and second aspects of the invention and vice versa.

According to a fourth aspect, the object is achieved by a computer program according to claim 14. The computer program comprises program code means for performing the steps of the method according to any one of the embodiments of the third aspect when said program is run on a computer, such as on a control unit.

According to a fifth aspect, the object is achieved by a computer readable medium carrying a computer program comprising program code means for performing the steps of the method according to any one of the embodiments of the third aspect when said program product is run on a computer, such as on a control unit.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic view from above of a system and a vehicle according to example embodiments of the present invention;
Figs. 2a-b are schematic views of images and reference images according to example embodiments of the present invention;
Fig. 3 is a side view of a vehicle according to an example embodiment of the present invention;
Fig. 4 is a schematic view of a last vehicle segment of a vehicle as shown in fig. 1; and
Fig. 5 is a flowchart of a method according to an example embodiment of the present invention.

Like reference characters refer to similar or the same elements throughout the drawings unless expressed otherwise.

### DETAILED DESCRIPTION OF EXAMPLE EMBODIMENTS OF THE INVENTION

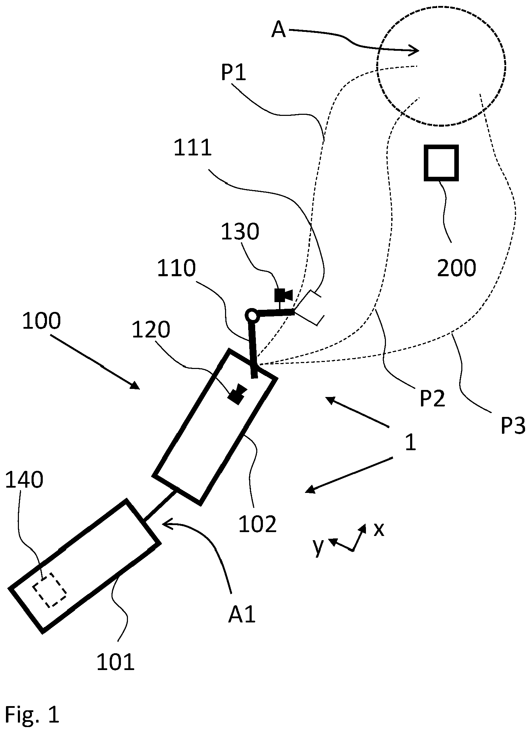

Fig. 1 is a schematic illustration of a vehicle 100 seen from above. The vehicle 100 is here an articulated vehicle combination comprising a first vehicle segment 101 and a second vehicle segment 102 which are connected via an articulation joint A1. The first vehicle segment 101 is a here a truck and the second vehicle segment 102 is a trailer. The vehicle 100 comprises a system 1 according to the first aspect of the invention.

The truck 101 may comprise a control unit 140, which is preferably an electronic control unit 140 comprising hardware or hardware and software for performing a method according to the third aspect of the invention. The control unit as disclosed herein may be any kind of electronic control unit, such as one single control unit or a plurality of communicatively connected sub-control units. The control unit 140 may also be denoted a computer.

The vehicle 100 further comprises a first perception sensor 120, which here is mounted on the trailer 102. The first perception sensor 120 is configured to obtain images of the surroundings, and is preferably a camera or any other device which is capable of obtaining images of the surroundings, such as a light detection and ranging (LIDAR) sensor, a radio detection and ranging (RADAR) sensor.

The vehicle 100 further comprises a robotic arm 110, which here is mounted at the back of the trailer 102. A second perception sensor 130, also preferably a camera, is mounted near a gripping member 111 of the robotic arm 110.

The control unit 140 is communicatively connected to the first and second perception sensors 120, 130.

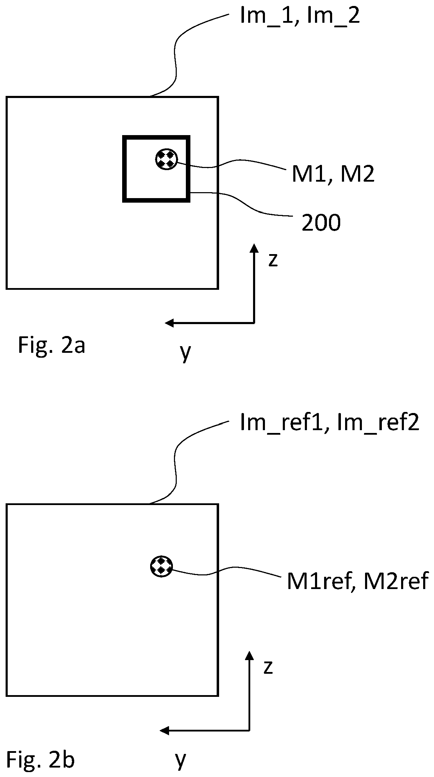

Fig. 2a depicts an image Im_1 which has been obtained by the first perception sensor 120. Fig. 2a also depicts an image Im_2 which has been obtained by the second perception sensor 130. Similarly, Fig. 2b depicts a reference image Im_ref1 to be used for the obtained image Im_1 of the first perception sensor 120. It also depicts a second reference image Im_ref2 to be used for the obtained image Im_2 of the second perception sensor 130.

With respect to especially figs. 1, 2a and 2b, a system 1 according to the first aspect of the invention will be described.

The system 1 is used for guiding the vehicle 100 and the associated robotic arm 110 for loading an object 200 onto the vehicle 100. The object 200 is in fig. 1 represented by a box, and may be any kind of goods, such as a loaded pallet, a cardboard box, a container etc.

The control unit 140 is configured to:
- obtain a first image Im_1 from the first perception sensor 120, which first image Im_1 depicts the object 200, and identify a first marker M1 in the obtained first image Im_1, which first marker M1 is provided on the object 200, and
- by use of a first image analysis algorithm, such as a first image matching algorithm, determine a first marker position with respect to the vehicle 100.

The first marker position may be determined in a two-dimensional plane y, z, defined by a lateral extension y of the vehicle 100 and a vertical extension z of the vehicle 100. Additionally, a distance to the first marker M1 may also be determined. The distance may be defined as a distance in the vehicle's longitudinal extension x. For example, the distance to the first marker M1 may be determined by use of the first image analysis algorithm.

The control unit 140 is further configured to:
- by use of the determined first marker position, determine a plurality of possible loading positions for the vehicle 100, which possible loading positions define an area A for the vehicle 100 with respect to the object 200 where the object 200 can be loaded onto the vehicle 100 by the robotic arm 110,
- by use of simulated robotic arm movements for loading the object 200 onto the vehicle 100 from each one of the plurality of possible loading positions, select one possible loading position in the area A as a loading position to be used by the vehicle 100, wherein the loading position to be used by the vehicle 100 is selected at least based on a predicted wear of the robotic arm 110 when loading the object 300 onto the vehicle 100 from each one of the plurality of possible loading positions. Accordingly, each simulation is done for obtaining a predicted wear for the robotic arm 130 for loading the object 200 from the respective possible loading positions.

The control unit 140 is further configured to guide the vehicle 100 along a path P1 to the loading position to be used by the vehicle 100. This may be done by use of the first perception sensor 120, as e.g. explained in the below.

The control unit 140 is further configured to:
- obtain a second image Im_2 from the second perception sensor 130, which second image Im_2 depicts the object 200, and identify a second marker M2 in the obtained second image Im_2, which second marker M2 is provided on the object 200, and
- by use of a second image analysis algorithm, such as a second image matching algorithm, determine a second marker position with respect to the robotic arm 110, and
- guide the robotic arm 110 to load the object 200 onto the vehicle 100 by use of the determined second marker position. The second image Im_2 is preferably obtained when the vehicle 100 has reached the loading position to be used.

Similar to the first marker position, the second marker position may be determined in a two-dimensional plane y, z, defined by a lateral extension of the robotic arm 130 and a vertical extension of the robotic arm 130, and/or by a lateral extension y of the vehicle 100 and a vertical extension z of the vehicle 100. Additionally, a distance to the second marker M2 may also be determined. The distance may be defined as a distance in the vehicle's longitudinal extension x. For example, the distance to the second marker M2 may be determined by use of the second image analysis algorithm. The first and the second markers M1, M2 as disclosed herein may be the same marker or different markers on the object 200.

Optionally, the control unit 140 may further be configured to:
- select the loading position to be used by the vehicle 100 by use of simulated vehicle guiding paths P1, P2, P3 for the vehicle 100 from a vehicle start position to each one of the plurality of possible loading positions, the vehicle start position being defined by a position of the vehicle 100 when the first image Im_1 was obtained, wherein the loading position to be used by the vehicle 100 is further selected based on at least one of a predicted vehicle manoeuvre stability, drive time and driver comfort which is/are associated with each one of the simulated vehicle guiding paths P1, P2, P3.

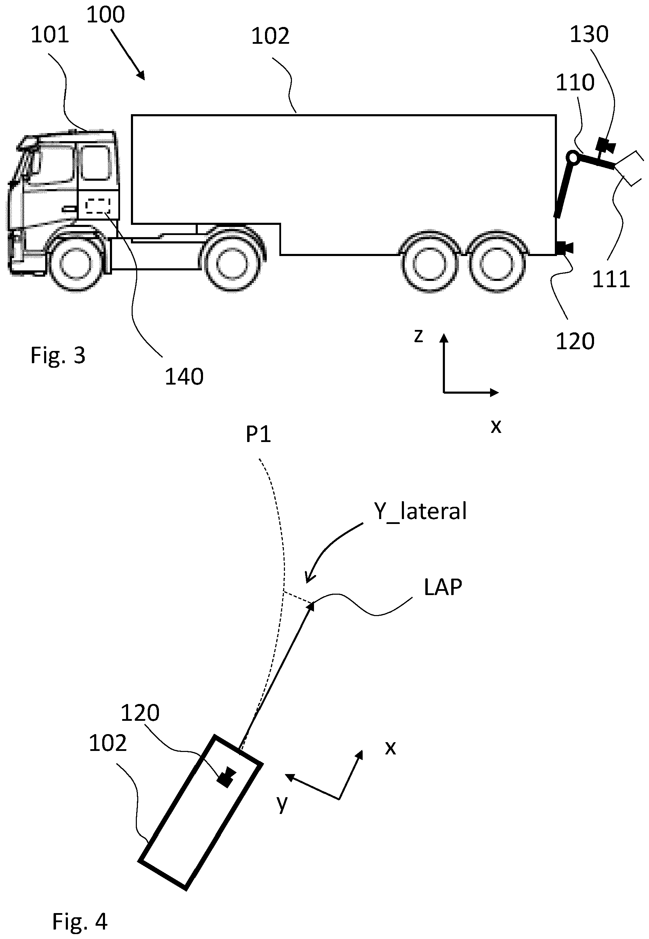

Accordingly, based on the above-mentioned simulations, the path P1 is selected in the embodiment shown in fig. 1. The simulations of the different guiding paths P1, P2 and P3 may be performed by use of a vehicle model for the articulated vehicle combination 100. Preferably, the vehicle model comprises the articulation angle of the articulation joint A1, whereby a change of the articulation joint A1 of the last vehicle segment 102 during movement of the vehicle 100 is simulated for the different paths P1, P2, P3. In particular, the guiding of the vehicle 100 is preferably performed by controlling the articulation angle of the articulation joint A1 of the last vehicle segment 102. The articulation angle may for example be measured by use of an articulation angle sensor (not shown). Still optionally, the guiding of the vehicle 100 may be performed by the control unit 140 being configured to determine a lateral distance Y_lateral, e.g. in the y-direction, between a look ahead point LAP and the path P1, see fig. 4. Fig. 4 depicts the last vehicle segment 102 as shown in fig. 1. Accordingly, the articulation angle of the articulation joint A1 of the last vehicle segment 102 may be controlled in this manner, such that the path P1 is followed. The look ahead point LAP is preferably provided a specific distance behind the vehicle segment 102 in the longitudinal extension x, such as 5-10 m. In particular, the articulation angle may be controlled by the control unit 140 such that the lateral distance Y_lateral is minimized. This control is preferably performed in a control loop. The lateral distance Y_lateral is preferably determined by use of the first perception sensor 120.

The predicted vehicle manoeuvre stability associated with each one of the simulated vehicle guiding paths P1, P2, P3 may define a maximum articulation angle of the at least one articulation joint A1 of the vehicle 100 while being guided along the respective simulated vehicle guiding paths P1, P2, P3, wherein the loading position to be used by the vehicle 100 is further selected such that the maximum articulation angle of the guiding path to the loading position to be used does not exceed a predetermined articulation angle value. For example, the above-mentioned articulation angle of the last vehicle segment 102 may be simulated like this, preventing this articulation angle to e.g. reach a jack-knifing condition of the articulated vehicle combination 100.

The first marker position with respect to the vehicle 100 may be determined by matching the obtained first image Im_1 with at least one first reference image Im_ref1, see figs. 2a-2b, wherein the first reference image Im_ref1 contains a first reference marker M1ref positioned at the same, or substantially the same, position as a position of the first marker M1 in the obtained first image Im_ref1, wherein the position of the first reference marker M1ref in the at least one first reference image Im_ref1 is associated with a first actual stored location, and wherein the first actual stored location corresponds to the first marker position with respect to the vehicle 100. Thereby, the first marker position with respect to the vehicle 100 can be determined in a fast and reliable manner. The at least one reference image M1ref and its associated first actual stored location is preferably obtained by a calibration process. This calibration process may for example be performed by placing a reference marker at a specific location behind a perception sensor, and determining the position of the reference marker in an obtained image, e.g. the position in the above-mentioned two-dimensional plane. The position is then associated with the actual location of the reference marker with respect to the perception sensor. In this way, a set of data can be generated and stored where the reference marker is provided at different locations with respect to the perception sensor, and where the position of the reference marker in each obtained image is associated with the respective actual locations.

The same, or similar, approach can also be used for the robotic arm 110 and its perception sensor 130. Accordingly, the second marker position with respect to the robotic arm 110 may be determined by matching the obtained second image Im_2 with at least one second reference image Im_ref2, wherein the second reference image Im_ref2 contains a second reference marker M2ref positioned at the same, or substantially the same, position as a position of the second marker M2 in the obtained second image Im_2, wherein the position of the second reference marker M2ref in the at least one second reference image Im_ref2 is associated with a second actual stored location, and wherein the second actual stored location corresponds to the second marker position with respect to the robotic arm 110. The at least one reference image M2ref and its associated second actual stored location is preferably obtained by a calibration process as mentioned in the above.

The distance, i.e. in the x-direction, to the first and second markers M1, M2 may be determined by determining a size of the respective marker M1, M2 in the respective images, Im_1, Im_2, wherein the size of the respective marker M1, M2 in each respective image Im_1, Im_2 is associated with a specific distance. The size may for example be determined by counting the number of pixels in the image where the marker is present.

The control unit 140 is preferably configured to identify a first and/or second marker M1, M2 having at least one predetermined property, such as marker size, marker shape, marker pattern, marker colour etc. In the shown embodiments, the markers M1, M2 comprise a specific pattern, i.e. alternating black and white squares.

In fig. 3 a side view of a truck and trailer combination 100 is shown, comprising a truck 101 and a connected trailer 102. The vehicle 100 comprises a robotic arm 110 mounted at the back of the trailer 102, and the robotic arm 110 comprises a gripping member 111 in the form of a claw member. The truck 101 comprises a control unit 140 according to the invention. The vehicle 100 further comprises a first perception sensor 120 and a second perception sensor 130 according to an embodiment of the invention.

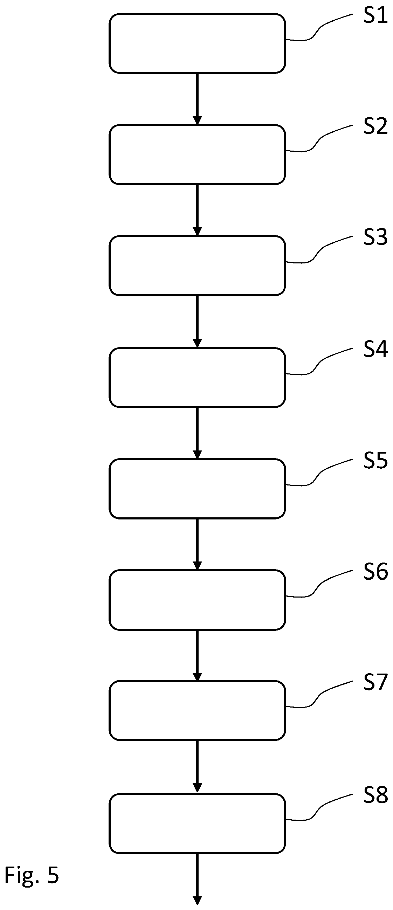

The invention also relates to a method for guiding a vehicle 100 and an associated robotic arm 110 for loading an object 200 onto the vehicle 100. The vehicle 100 is associated with a system 1 which comprises a first perception sensor 120 associated with the vehicle 100 and a second perception sensor 130 associated with the robotic arm 110.
With respect to fig. 5, the method comprises:
S1: obtaining a first image Im_1 from the first perception sensor 120, which first image depicts the object 200, and identifying a first marker M1 in the obtained first image, which first marker M1 is provided on the object 200, and
   - by use of a first image analysis algorithm, such as a first image matching algorithm,
S2: determining a first marker position with respect to the vehicle 100,
   - by use of the determined first marker position,
S3: determining a plurality of possible loading positions for the vehicle 100, which possible loading positions define an area A for the vehicle 100 with respect to the object 200 where the object can be loaded onto the vehicle 100 by the robotic arm 110,
   - by use of simulated robotic arm movements for loading the object 200 onto the vehicle 100 from each one of the plurality of possible loading positions,
S4: selecting one possible loading position in the area A as a loading position to be used by the vehicle 100, wherein the loading position to be used by the vehicle 100 is selected at least based on a predicted wear of the robotic arm 110 when loading the object 200 onto the vehicle 100 from each one of the plurality of possible loading positions,
S5: guiding the vehicle 100 along a path P1 to the loading position to be used by the vehicle 100, and
   wherein the method further comprises:
S6: obtaining a second image Im_2 from the second perception sensor 130, which second image Im_2 depicts the object 200, and identifying a second marker M2 in the obtained second image Im_2, which second marker M2 is provided on the object 200, and
   - by use of a second image analysis algorithm, such as a second image matching algorithm,
S7: determining a second marker position with respect to the robotic arm 110, and
S8: guiding the robotic arm 110 to load the object 200 onto the vehicle 100 by use of the determined second marker position.

It is to be understood that the present invention is not limited to the embodiments described above and illustrated in the drawings; rather, the skilled person will recognize that many changes and modifications may be made within the scope of the appended claims.

## Claims

1. A system (1) for guiding a vehicle (100) and an associated robotic arm (110) for loading an object (200) onto the vehicle (100), the system comprising:
- a first perception sensor (120) associated with the vehicle (100);
- a second perception sensor (130) associated with the robotic arm (110);
- a control unit (140) communicatively connected to the first and second perceptions sensors (120, 130);
wherein the control unit (140) is configured to:
- obtain a first image (Im_1) from the first perception sensor (120), which first image depicts the object (200), and identify a first marker (M1) in the obtained first image, which first marker (M1) is provided on the object (200), and
- by use of a first image analysis algorithm, such as a first image matching algorithm, determine a first marker position with respect to the vehicle (100),
- by use of the determined first marker position, determine a plurality of possible loading positions for the vehicle, which possible loading positions define an area (A) for the vehicle (100) with respect to the object (200) where the object can be loaded onto the vehicle (100) by the robotic arm (110),
- by use of simulated robotic arm movements for loading the object (200) onto the vehicle (100) from each one of the plurality of possible loading positions, select one possible loading position in the area (A) as a loading position to be used by the vehicle (100), wherein the loading position to be used by the vehicle (100) is selected at least based on a predicted wear of the robotic arm (110) when loading the object (300) onto the vehicle (100) from each one of the plurality of possible loading positions,
- guide the vehicle (100) along a path (P1) to the loading position to be used by the vehicle (100), and
wherein the control unit (140) is further configured to:
- obtain a second image (Im_2) from the second perception sensor (130), which second image depicts the object (200), and identify a second marker (M2) in the obtained second image, which second marker (M2) is provided on the object (200), and
- by use of a second image analysis algorithm, such as a second image matching algorithm, determine a second marker position with respect to the robotic arm (110), and
- guide the robotic arm (110) to load the object (200) onto the vehicle (100) by use of the determined second marker position.

2. The system (1) according to claim 1, wherein the control unit (140) is further configured to:
- select the loading position to be used by the vehicle (100) by use of simulated vehicle guiding paths (P1, P2, P3) for the vehicle (100) from a vehicle start position to each one of the plurality of possible loading positions, the vehicle start position being defined by a position of the vehicle (100) when the first image (Im_1) was obtained, wherein the loading position to be used by the vehicle (100) is further selected based on at least one of a predicted vehicle manoeuvre stability, drive time and driver comfort which is/are associated with each one of the simulated vehicle guiding paths (P1, P2, P3).

3. The system (1) according to claim 2, wherein the vehicle (100) is an articulated vehicle combination comprising at least one articulation joint (A1), and wherein the vehicle guiding paths (P1, P2, P3) are simulated by use of a vehicle model for the articulated vehicle combination.

4. The system (1) according to claim 3, wherein the predicted vehicle manoeuvre stability associated with each one of the simulated vehicle guiding paths (P1, P2, P3) defines a maximum articulation angle of the at least one articulation joint (A1) of the vehicle while being guided along the respective simulated vehicle guiding paths, wherein the loading position to be used by the vehicle (100) is further selected such that the maximum articulation angle of the guiding path to the loading position to be used does not exceed a predetermined articulation angle value.

5. The system (1) according to any one of the preceding claims, wherein the first marker position with respect to the vehicle (100) is determined by matching the obtained first image (Im_1) with at least one first reference image (Im_ref1), wherein the first reference image (Im_ref1) contains a first reference marker (M1ref) positioned at the same, or substantially the same, position as a position of the first marker (M1) in the obtained first image (Im_1), wherein the position of the first reference marker (M1) in the at least one first reference image (Im_ref1) is associated with a first actual stored location, and wherein the first actual stored location corresponds to the first marker position with respect to the vehicle (100).

6. The system (1) according to any one of the preceding claims, wherein the second marker position with respect to the robotic arm (110) is determined by matching the obtained second image (Im_2) with at least one second reference image (Im_ref2), wherein the second reference image (Im_ref2) contains a second reference marker (M2ref) positioned at the same, or substantially the same, position as a position of the second marker (M2) in the obtained second image (Im_2), wherein the position of the second reference marker (M2ref) in the at least one second reference image (Im_ref2) is associated with a second actual stored location, and wherein the second actual stored location corresponds to the second marker position with respect to the robotic arm (110).

7. The system (1) according to any one of the preceding claims, wherein the control unit (140) is configured to identify a first and/or second marker (M1, M2) having at least one predetermined property, such as marker size, marker shape, marker pattern, marker colour etc.

8. A vehicle (100) comprising a system (1) according to any one of the preceding claims.

9. The vehicle (100) according to claim 8, further comprising a robotic arm (110).

10. The vehicle (100) according to claim 9, wherein the second perception sensor (130) is mounted on the robotic arm (110), preferably proximate a gripping member (111) of the robotic arm (110).

11. The vehicle (100) according to any one of claims 8-10, wherein the vehicle (100) is an articulated vehicle combination comprising at least one articulation joint (A1).

12. The vehicle (100) according to any one of claims 8-11, wherein the first perception sensor (120) is mounted on the vehicle (100) such that it is directed in a reverse travelling direction of the vehicle (100), such as mounted on a last vehicle segment (102) of the articulated vehicle combination of claim 11 and such that it is directed in a reverse travelling direction of the articulated vehicle combination.

13. A method for guiding a vehicle (100) and an associated robotic arm (110) for loading an object (200) onto the vehicle (100), the vehicle being associated with a system (1) comprising:
- a first perception sensor (120) associated with the vehicle (100);
- a second perception sensor (130) associated with the robotic arm (110);
wherein the method comprises:
- obtaining a first image (Im_1) from the first perception sensor (120), which first image depicts the object (200), and identifying a first marker (M1) in the obtained first image, which first marker (M1) is provided on the object (200), and
- by use of a first image analysis algorithm, such as a first image matching algorithm, determining a first marker position with respect to the vehicle (100),
- by use of the determined first marker position, determining a plurality of possible loading positions for the vehicle (100), which possible loading positions define an area (A) for the vehicle (100) with respect to the object (200) where the object can be loaded onto the vehicle (100) by the robotic arm (110),
- by use of simulated robotic arm movements for loading the object (200) onto the vehicle (100) from each one of the plurality of possible loading positions, selecting one possible loading position in the area (A) as a loading position to be used by the vehicle (100), wherein the loading position to be used by the vehicle (100) is selected at least based on a predicted wear of the robotic arm (110) when loading the object (200) onto the vehicle (100) from each one of the plurality of possible loading positions,
- guiding the vehicle (100) along a path (P1) to the loading position to be used by the vehicle (100), and
wherein the method further comprises:
- obtaining a second image (Im_2) from the second perception sensor (130), which second image depicts the object (200), and identifying a second marker (M2) in the obtained second image, which second marker (M2) is provided on the object (200), and
- by use of a second image analysis algorithm, such as a second image matching algorithm, determining a second marker position with respect to the robotic arm (110), and
- guiding the robotic arm to load the object (200) onto the vehicle (100) by use of the determined second marker position.

14. A computer program comprising program code means for performing the steps of claim 13 when said program is run on a computer, such as on a control unit (140).

15. A computer readable medium carrying a computer program comprising program code means for performing the steps of claim 13 when said program product is run on a computer, such as on a control unit (140).
